# EUROPEAN PATENT SPECIFICATION

(11) **EP 2 362 098 B1**
(45) Date of publication and mention of the grant of the patent: **11.09.2019**
(21) Application number: 09834650.5
(22) Date of filing: 13.11.2009
(51) Int. Cl.: F04B 39/00, F04C 29/00, H02K 7/14, H02K 11/00, H02M 7/48

(54) **INVERTER-INTEGRATED ELECTRIC COMPRESSOR**
ELEKTRISCHER KOMPRESSOR MIT INTEGRIERTEM UMRICHTER
COMPRESSEUR ÉLECTRIQUE À INVERSEUR INCORPORÉ

(30) Priority: 22.12.2008 JP 2008325788
(43) Date of publication of application: 31.08.2011
(73) Proprietor: Mitsubishi Heavy Industries, Ltd., Tokyo 108-8215 (JP)
(72) Inventor: NIWA, Kazuki, Kiyosu-shi Aichi 452-8561 (JP); HATTORI, Makoto, Kiyosu-shi Aichi 452-8561 (JP); ASAI, Masahiko, Kiyosu-shi Aichi 452-8561 (JP); KAWASHIMA, Toyohisa, Kiyosu-shi Aichi 452-8561 (JP); NAKAGAMI, Takashi, Nagoya-shi Aichi 453-8515 (JP); NAKANO, Koji, Nagoya-shi Aichi 453-8515 (JP)
(74) Representative: Henkel, Breuer & Partner
(86) International application number: PCT/JP2009/069317
(87) International publication number: WO 2010/073846

(56) References cited:
- EP-A2- 1 840 683
- WO-A1-2008/093544
- WO-A1-2008/152906
- JP-A- 2004 336 907
- JP-B2- 3 994 821
- JIAN HU ET AL: "Design of City-Bus Intelligent Control System Framework", MECHATRONICS AND AUTOMATION, PROCEEDINGS OF THE 2006 IEEE INTERNATIONA L CONFERENCE ON, IEEE, PI, 1 June 2006 (2006-06-01), pages 2307-2311, XP031027145, ISBN: 978-1-4244-0465-0
- ZHOU NENGHUI ET AL: "Development of powertrain controller platform for electric vehicles based on abstraction layer structure", VEHICLE POWER AND PROPULSION CONFERENCE, 2008. VPPC '08. IEEE, IEEE, PISCATAWAY, NJ, USA, 3 September 2008 (2008-09-03), pages 1-4, XP031363337, DOI: 10.1109/VPPC.2008.4677657 ISBN: 978-1-4244-1848-0
- JIAN HU ET AL: "Design and Application of SAE J1939 Communication Database in City-Bus Information Integrated Control System Development", MECHATRONICS AND AUTOMATION, 2007. ICMA 2007. INTERNATIONAL CONFERENCE ON, IEEE, PI, 1 August 2007 (2007-08-01), pages 3429-3434, XP031135310, ISBN: 978-1-4244-0827-6
- BYHLIN S ET AL: "Applying Static WCET Analysis to Automotive Communication Software", REAL-TIME SYSTEMS, 2005. (ECRTS 2005). PROCEEDINGS. 17TH EUROMICRO CON FERENCE ON PALMA DE MALLORCA, BALEARIC ISLANDS, SPAIN 06-08 JULY 2005, PISCATAWAY, NJ, USA,IEEE, 6 July 2005 (2005-07-06), pages 249-258, XP010835784, ISBN: 978-0-7695-2400-9

## Description

### {Technical Field}

The present invention relates to an inverter-integrated electric compressor having an inverter unit integrated therein, suitable for use in a vehicle air conditioner.

### {Background Art}

As compressors for air conditioners installed in electric vehicles, hybrid vehicles, or the like, electric compressors of the type in which an electric motor is built in and integrated inside a housing are used. Generally, an electric compressor of this type has an integrated inverter unit at the periphery of the housing, which converts DC power supplied from a high-voltage power supply into three-phase AC power and supplies the three-phase AC power to the electric motor via a glass-sealed terminals, variably controlling the rotation speed of the electric motor for driving the compressor.

The inverter unit includes a power-system board having mounted thereon high-voltage electrical-equipment components provided on a high-voltage power supply line, such as a smoothing capacitor, a normal-mode coil, and a common-mode coil, and a switching circuit implemented by semiconductor switching elements such as IGBTs; a CPU board having mounted thereon a control and communication circuit implemented by elements that operate at a low voltage, such as a CPU; and so forth. The inverter is integrated by being installed inside an accommodating unit provided at the periphery of the housing of the electric compressor.

The control and communication circuit provided on the CPU board of the inverter unit is connected via a communication cable to an upper-level control unit provided in the vehicle, i.e., a vehicle-side ECU (Electric Control Unit), and is configured so that it is controlled according to instructions from the vehicle. As a form of this communication, CAN (Controller Area Network), which is a vehicle LAN, is used. Usually, only one communication system is provided (e.g., see Patent Documents 1 and 2).

### {Citation List}

### {Patent Literature}

{PTL 1}
   Japanese Unexamined Patent Application, Publication No. 2004-336907
{PTL 2}
   Japanese Unexamined Patent Application, Publication No. 2008-17595

The international patent application publication WO2008093544 discloses a compressor with an integrated inverter.

### {Summary of Invention}

### {Technical Problem}

However, in CAN used as a vehicle LAN, both high-speed CAN and low-speed CAN exist, depending on the vehicle manufacturer or the vehicle type. Therefore, a compressor manufacturer is required to manufacture a variety of inverter-integrated electric compressors for individual purposes, resulting in poor manufacturing efficiency and thus failing to gain benefits of mass production. Furthermore, when only one CAN communication system is provided, in order to allow communications, all the devices, including devices other than those to be operated, must be operated, resulting in the problem of inefficient power consumption.

The present invention has been made in view of the situation described above, and it is an object thereof to provide an inverter-integrated electric compressor that makes it possible to improve versatility and to readily deal with diverse communication methods and functions.

### {Solution to Problem}

In order to solve the problems described above, an inverter-integrated electric compressor according to claim 1 is provided.

That is, in an inverter-integrated electric compressor having an inverter unit integrated therein, the inverter unit is provided with a plurality of CAN (Controller Area Network) receiver circuits for CAN communications with a vehicle-side control unit, one of the CAN receiver circuits being a high-speed CAN receiver circuit and another one being a low-speed CAN receiver circuit, allowing connection with two CAN buses, namely, a high-speed CAN bus and a low-speed CAN bus.

According to the present invention, the inverter unit is provided with two CAN (Controller Area Network) receiver circuits for CAN communications with a vehicle-side control unit, namely, a high-speed CAN receiver circuit and a low-speed CAN receiver circuit, allowing connection with two CAN buses, namely, a high-speed CAN bus and a low-speed CAN bus. Therefore, regardless of whether CAN communications on the vehicle employ high-speed CAN or low-speed CAN, the communications can be handled by a single type of electric compressor. Accordingly, it is possible to improve versatility of the inverter-integrated electric compressor. Furthermore, even when the vehicle requires that the two communication systems, namely, high-speed CAN and low-speed CAN, be used separately depending on the case, communications can be handled by the single type of electric compressor. Accordingly, it is possible to readily deal with diverse communication methods and functions. At this time, by using high-speed CAN when the volume of information is large and using low-speed CAN in other cases, for example, with a fault self-diagnosis system called an OBD (On-Board Diagnostics) system, when data is requested from the vehicle, the request can be handled by sending data via high-speed CAN. Furthermore, in the case of an electric vehicle, a plug-in HEV, or the like, when the battery is charged, an electric compressor for an air conditioner is operated in order to cool the battery. In this case, with only one CAN communication system provided, all the devices must be operated in order to allow communications, resulting in inefficient power consumption. In contrast, with two CAN communication systems provided, namely, high-speed CAN and low-speed CAN, it becomes possible to operate only devices to be operated, depending on use. Accordingly, a reduction in power consumption can be expected, and noise can be reduced by restricting use of high-speed CAN, which generates a large amount of noise.

Furthermore, in the inverter-integrated electric compressor according to the present invention, preferably, the high-speed CAN receiver circuit and the low-speed CAN receiver circuit are provided on a CPU board that is provided separately from a power-system board of the inverter unit.

With this configuration, since the high-speed CAN receiver circuit and the low-speed CAN receiver circuit are provided on the CPU board that is provided separately from the power-system board, it is possible to install the high-speed CAN receiver circuit and the low-speed CAN receiver circuit in communication circuitry such that these receiver circuits are separated and isolated from the power-system board, to which a high-voltage is applied. Accordingly, it is possible to reduce communication errors due to the effect of electromagnetic noise or the like from the power-system board.

### {Advantageous Effects of Invention}

According to the present invention, regardless of whether CAN communications on the vehicle employ high-speed CAN or low-speed CAN, the communications can be handled by a single type of electric compressor. Furthermore, even when the vehicle requires that the two communication systems, namely, high-speed CAN and low-speed CAN, be used separately depending on the case, communications can be handled by the single type of electric compressor. Accordingly, it is possible to improve versatility of the inverter-integrated electric compressor and to readily deal with diverse communication methods and functions. Furthermore, in the case where high-speed CAN and low-speed CAN are used distinctively, a reduction in power consumption and reduction of noise can be expected.

### {Brief Description of Drawings}

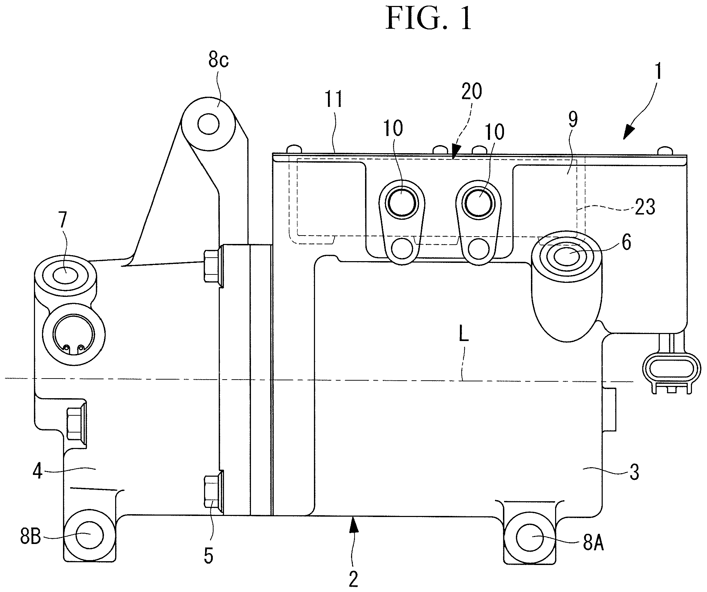

{Fig. 1}
   Fig. 1 is a side view of an inverter-integrated electric compressor according to an embodiment of the present invention.
{Fig. 2}
   Fig. 2 is a perspective view of an inverter unit integrated in the inverter-integrated electric compressor shown in Fig. 1.
{Fig. 3}
   Fig. 3 is a view corresponding to a vertical section A-A of the inverter unit shown in Fig. 2.
{Fig. 4}
   Fig. 4 is a circuit diagram of communication systems relevant to the inverter unit shown in Fig. 3.

### {Description of Embodiments}

An embodiment of the present invention will be described below with reference to the drawings.

Here, the embodiment of the present invention will be described with reference to Figs. 1 to 4.

Fig. 1 shows an external side view of an inverter-integrated electric compressor according to the embodiment of the present invention.

An inverter-integrated electric compressor 1 includes a housing 2 constituting an external case. The housing 2 is constructed by fastening together a motor housing 3 accommodating an electric motor (not shown) and a compressor housing 4 accommodating a compressor (not shown) via bolts 5. The motor housing 3 and the compressor housing 4 are pressure-resistant cases and are formed by aluminum die casting.

The electric motor and the compressor accommodated inside the housing 2, which are not shown, are linked together via a motor shaft and are thus configured so that the compressor is driven by rotation of the electric motor. At one end of the motor housing 3 (right side in Fig. 1), a refrigerant suction port 6 is provided. Low-temperature, low-pressure refrigerant gas taken into the motor housing 3 from the refrigerant suction port 6 flows around the electric motor in the direction of a motor axis L and is then taken into and compressed by the compressor. The high-temperature, high-pressure refrigerant gas compressed by the compressor is configured to be discharged into the compressor housing 4 and then to be discharged to the outside from a discharge port 7 provided at one end of the compressor housing 4 (left side in Fig. 1).

For example, the housing 2 is provided with attachment legs 8A, 8B, and 8C at three points in total, specifically, two points at the bottom on one end of the motor housing 3 (right side in Fig. 1) and the bottom on one end of the compressor housing 4 (left side in Fig. 1) and one point at the top of the compressor housing 4. The inverter-integrated electric compressor 1 is installed on a vehicle by fastening the attachment legs 8A, 8B, and 8C via brackets and bolts with a side wall or the like of a vehicle-running prime mover installed in an engine compartment of the vehicle.

At the periphery of the motor housing 3, a box-shaped inverter accommodating unit 9 is formed integrally at the top thereof. The inverter accommodating unit 9 has a box shape having an open top and surrounded by a wall having a certain height, and two cable lead-out ports 10 are provided on a side face thereof. Furthermore, the top face of the inverter accommodating unit 9 is tightly closed by fastening a lid 11 thereto via screws.

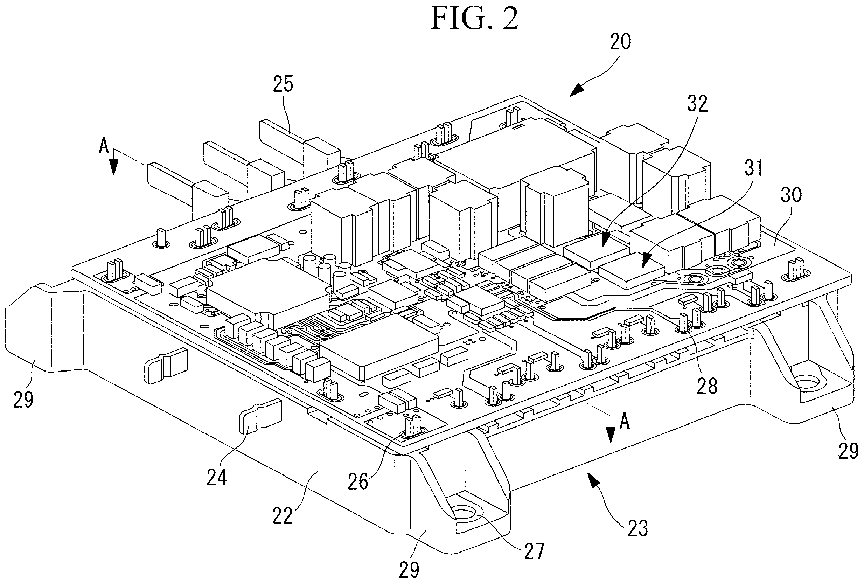

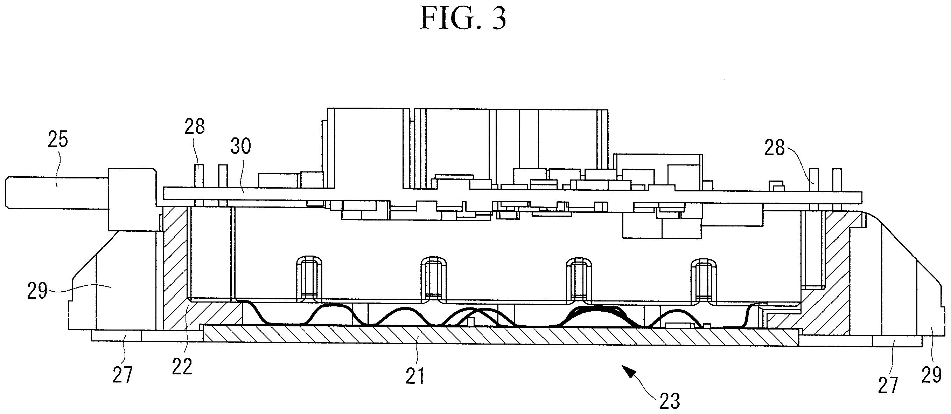

The inverter accommodating unit 9 accommodates therein an inverter unit 20 that converts DC power into three-phase AC power, the DC power being supplied via a high-voltage cable from a high-voltage power supply unit, a battery, or the like installed on the vehicle, which are not shown, and that supplies the three-phase AC power to the electric motor accommodated inside the motor housing 3. Fig. 2 shows a perspective view of the inverter unit 20, and Fig. 3 shows a view corresponding to a section A-A in Fig. 2.

The inverter unit 20 includes an inverter module 23 in which a power-system board 21 and a plastic case 22 are integrated by insert molding, the power-system board 21 being formed of an aluminum plate having mounted thereon a switching circuit implemented by a plurality of semiconductor switching elements such as IGBTs, a snubber capacitor, a discharge resistor, and so forth, which are not shown. The top face of the power-system board 21 is filled with a thermosetting epoxy resin, which is not shown, so that the high-voltage switching circuit is resin-encapsulated for insulation and anti-humidity purposes.

Inside the plastic case 22, in addition to the power-system board 21, P-N terminals 24 that are connected to the high-voltage power supply, U-V-W terminals 25 that supply three-phase AC power to the electric motor, a ground 26 and a ground terminal 27, a large number of connection terminals 28 for connecting the power-system board 21 with a CPU board 30 described later, and so forth are formed integrally by insert molding. The plastic case 22 has a rectangular shape, with the P-N terminals 24 projecting from one edge located along the side face where the cable lead-out ports 10 of the inverter accommodating unit 9 are formed, and with the U-V-W terminals 25 projecting from an adjacent edge closer to the compressor housing 4.

Furthermore, at the individual corners of the plastic case 22, fastening legs 29 that are fastened to the bottom face of the inverter accommodating unit 9 via bolts are formed integrally. At the fastening legs 29, the ground terminals 27 that can be penetrated with bolts are provided. The grounds of the power-system board 21 and the CPU board 30 described later are configured to be chassis-grounded by fastening the plastic case 22 to the bottom face of the inverter accommodating unit 9 via bolts.

On the top face of the plastic case 22 constituting the inverter module 23, a CPU board (printed board) 30 slightly larger than the plastic case 22 is provided in connection with the large number of connecting terminals 28 and the ground 26. The CPU board 30 has mounted thereon a control and communication circuit implemented by components that operate at a low voltage, such as a CPU, and it is configured to control a power-system circuit (switching circuit) mounted on the power-system board 21.

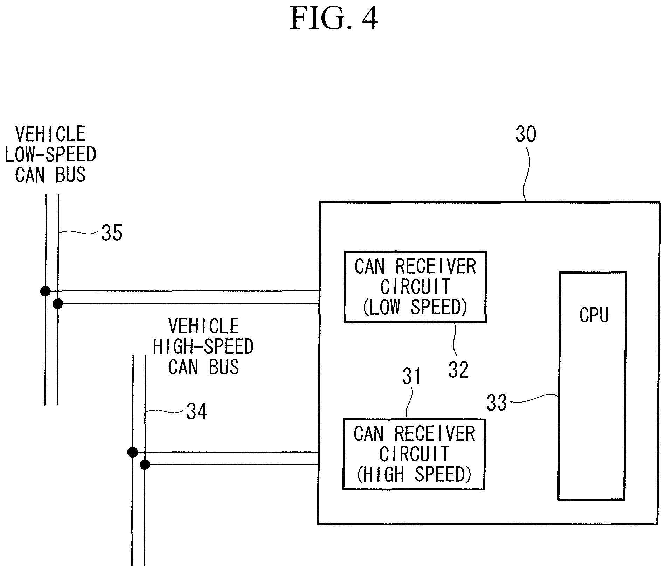

In a control system that controls an electric compressor of a vehicle air conditioner, a CAN (Controller Area Network), which is a vehicle LAN, is used as a form of communication with the vehicle. Thus, on the CPU board 30 described above, a CAN receiver circuit constituting a control and communication circuit is provided, so that it is configured to allow connection with a communication cable from an upper-level control unit provided in the vehicle, i.e., a vehicle-side ECU (Electric Control Unit), which is not shown. In this embodiment, as shown in Figs. 2 and 4, a plurality of CAN receiver circuits 31 and 32 for CAN communications are provided on the CPU board 30, each being connected to a CPU 33.

Of the plurality of CAN receiver circuits 31 and 32, one is a high-speed CAN receiver circuit 31, and the other is a low-speed CAN receiver circuit 32. The high-speed CAN receiver circuit 31 and the low-speed CAN receiver circuit 32 are connectable to either one of or both two CAN buses 34 and 35 constituting communication systems with the vehicle-side ECU, namely, a high-speed CAN bus (CAN-BUS) 34 and a low-speed CAN bus (CAN-BUS) 35. In the example shown here, the high-speed CAN bus 34 and the low-speed CAN bus 35 are both dual-wire buses.

With the configuration described above, according to this embodiment, the following operational advantages are achieved.

DC power supplied from the high-voltage power supply unit installed on the vehicle to the inverter unit 20 of the electric compressor 1 via the high-voltage cable is input to the switching circuit on the power-system board 21 via the P-N terminals 24 and is converted into three-phase AC power at a control instruction frequency by the switching operation of the semiconductor switching elements controlled by the control circuit on the CPU board 30, and then the three-phase AC power is supplied from the U-V-W terminals 25 to the electric motor inside the motor housing 3 via the glass-sealed terminals.

The control and communication circuit provided on the CPU board 30 controls the inverter unit 20 according to instructions transmitted from the upper-level control unit provided on the vehicle, i.e., the vehicle-side ECU (Electric Control Unit), to either one of or both the high-speed CAN receiver circuit 31 and the low-speed CAN receiver circuit 32 connected to the vehicle-side ECU via either one of or both the high-speed CAN bus 34 and the low-speed CAN bus 35.

Thus, the electric motor of the electric compressor 1 is driven to rotate at the control instruction frequency, whereby the compressor operates. By the operation of the compressor, low-temperature, low-pressure refrigerant gas is taken into the motor housing 3 from the refrigerant suction port 6. The refrigerant flows around the electric motor toward the compressor housing 4 in the direction of the motor axis L and is then taken into the compressor, where the refrigerant is compressed to a high-temperature, high-pressure state, and the refrigerant is then discharged to the outside of the electric compressor 1 via the discharge port 7.

During this operation, the low-temperature, low-pressure refrigerant gas that is taken into the motor housing 3 from the refrigerant suction port 6 and that flows in the direction of the motor axis L cools the power-system board 21 of the inverter unit 20, which is installed in tight contact at the bottom face of the inverter accommodating unit 9 via the housing wall of the motor housing 3. Thus, heat-generating elements mounted on the power-system board 21, such as the semiconductor switching elements, are cooled forcibly. This ensures heat-resisting properties of the inverter unit 20.

Meanwhile, in the inverter-integrated electric compressor 1 according to this embodiment, the inverter unit 20 is provided with two CAN (Controller Area Network) receiver circuits, namely, the high-speed CAN receiver circuit 31 and the low-speed CAN receiver circuit 32, for connecting CAN communication cables with the vehicle-side ECU (Electric Control Unit), allowing connection with two CAN buses, namely, the high-speed CAN bus 34 and the low-speed CAN bus 35. Therefore, whether CAN communications employed on the vehicle on which the inverter-integrated electric compressor 1 is installed is high-speed CAN or low-speed CAN, the communications can be handled by the single type of electric inverter 1. Accordingly, it is possible to improve the versatility of the inverter-integrated electric compressor 1.

Furthermore, even when the vehicle requires that the two communication systems, namely, high-speed CAN and low-speed CAN, be used separately depending on the case, communications can be handled by the single type of electric compressor 1. Accordingly, it is possible to readily deal with diverse communication methods and functions. At this time, by using high-speed CAN when the volume of information is large and using low-speed CAN in other cases, for example, with a fault self-diagnosis system called an OBD (On-Board Diagnostics) system, when data is requested from the vehicle, the request can be handled by sending data via high-speed CAN.

Furthermore, in the case of an electric vehicle, a plug-in HEV, or the like, when the battery is charged, the electric compressor 1 for the air conditioner is operated in order to cool the battery. In this case, with only one CAN communication system provided, all the devices must be operated in order to allow communications, resulting in inefficient power consumption. In contrast, with two CAN communication systems provided, namely, high-speed CAN and low-speed CAN, it becomes possible to operate only devices to be operated, depending on use. Accordingly, a reduction in power consumption can be expected, and noise can be reduced by restricting the use of high-speed CAN, which generates a large amount of noise.

Furthermore, since the high-speed CAN receiver circuit 31 and the low-speed CAN receiver circuit 32 provided at the inverter unit 20 are provided on the CPU board 30, which is provided separately from the power-system board 21, the high-speed CAN receiver circuit 31 and the low-speed CAN receiver circuit 32 in the communication circuitry can be installed such that these receiver circuits are separated and isolated from the power-system board 21 having thereon the switching circuit, to which a high-voltage is applied. Accordingly, communication errors due to the effect of electromagnetic noise or the like from the power-system board 21 can be reduced.

For example, although the embodiment described above is an example where the inverter accommodating unit 9 is formed integrally with the motor housing 3, the inverter accommodating unit 9 need not necessarily be formed integrally, and the inverter accommodating unit 9 may be formed separately and attached to the motor housing 3. Furthermore, the compressor is not particularly limited, and any type of compressor may be used.

Furthermore, although the high-speed CAN bus 34 and the low-speed CAN bus 35 are both dual-wire buses in the embodiment described above, the low-speed CAN bus 35 connected to the low-speed CAN receiver circuit 32 may be implemented by a single wire.

### {Reference Signs List}

- 1: Inverter-integrated electric compressor
- 20: Inverter unit
- 21:: Power-system board
- 30:: CPU board
- 31:: High-speed CAN receiver circuit
- 32:: Low-speed CAN receiver circuit
- 34:: High-speed CAN bus
- 35:: Low-speed CAN bus

## Claims

1. An inverter-integrated electric compressor (1) having an inverter unit (20) integrated therein,
**characterized in that** the inverter unit (20) is provided with a plurality of CAN (Controller Area Network) receiver circuits (31,32) for CAN communications with a vehicle-side control unit, at least one of the CAN receiver circuits (31,32) being a high-speed CAN receiver circuit (31) allowing connection with a high-speed CAN bus (34) and at least one of the other CAN receiver circuits (31,32) being a low-speed CAN receiver circuit (32), allowing connection with a low-speed CAN bus (35) ;
wherein the high-speed CAN bus (34) and the low-speed CAN bus (35) are connected to the vehicle side control unit.

2. An inverter-integrated electric compressor (1) according to Claim 1, wherein the high-speed CAN receiver circuit (31) and the low-speed CAN receiver circuit (32) are provided on a CPU board (30) that is provided separately from a power-system board (21) of the inverter unit (20).

3. An electrical vehicle comprising:
a vehicle air conditioner, including an inverter-integrated electric compressor (1) according to claim 1 or 2;
a vehicle-side electric control unit (ECU) forming an upper level control;
a vehicle high-speed CAN bus (34); and
a vehicle low-speed CAN bus (35.

## Patentansprüche

1. Elektrischer Kompressor (1) mit integriertem Umrichter mit einer Umrichtereinheit (20), die in diesem integriert ist,
**dadurch gekennzeichnet, dass**
die Umrichtereineheit (20) mit einer Mehrzahl von CAN (Controller Area Network)- Empfängerschaltungen (31,32) für CAN-Kommunikation mit einer fahrzeugseitigen Steuereinheit versehen ist, wobei zumindest eine der CAN-Empfängerschaltungen (31,32) eine Hochgeschwindigkeits-CAN-Empfängerschaltung (31) ist, die eine Verbindung mit einem Hochgeschwindigkeits-CAN-Bus (34) ermöglicht, und wobei zumindest eine der anderen CAN-Empfängerschaltungen (31,32) eine Niedergeschwindigkeits-CAN-Empfängerschaltung (32) ist, die die Verbindung mit einem Niedergeschwindigkeits-CAN-Bus (35) ermöglicht,
wobei der Hochgeschwindigkeits-CAN-Bus (34) und der Niedergeschwindigkeits-CAN-Bus (35) mit der Fahrzeugseitigen Steuereinheit verbunden sind.

2. Elektrischer Kompressor (1) mit integriertem Umrichter nach Anspruch 1, bei dem die Hochgeschwindigkeits-CAN-Empfängerschaltung (31) und die Niedergeschwindigkeits-CAN-Empfängerschaltung (32) auf einer CPU-Platine (30) vorgesehen sind, die getrennt von einer Leistungssystemplatine (21) der Umrichtereinheit (20) vorgesehen ist.

3. Ein elektrisches Fahrzeug mit:
einer Fahrzeugklimaanlage mit einem elektrischen Kompressor (1) mit integriertem Umrichter nach Anspruch 1 oder 2;
einer fahrzeugseitigen elektrischen Steuereinheit (ECU) die eine Steuerung höheren Pegels bildet;
einem fahrzeugseitigen Hochgeschwindigkeits-CAN-Bus (34) und
einen fahrzeugseitigen Niedergeschwindigkeits-CAN-Bus (35) .

## Revendications

1. Compresseur électrique à onduleur intégré (1) ayant une unité d'onduleur (20) intégrée dans celui-ci,
**caractérisé en ce que**
l'unité d'onduleur (20) est pourvue d'une pluralité de circuits de récepteur CAN (Controller Area Network) (31, 32) pour des communications CAN avec une unité de commande côté véhicule, au moins l'un des circuits de récepteur CAN (31, 32) étant un circuit de récepteur CAN à haut débit (31) permettant une connexion avec un bus CAN à haut débit (34) et au moins l'un des autres circuits de récepteur CAN (31, 32) étant un circuit de récepteur CAN à faible débit (32), permettant une connexion avec un bus CAN à faible débit (35) ;
dans lequel le bus CAN à haut débit (34) et le bus CAN à faible débit (35) sont connectés à l'unité de commande côté véhicule.

2. Compresseur électrique à onduleur intégré (1) selon la revendication 1, dans lequel le circuit de récepteur CAN à haut débit (31) et le circuit de récepteur CAN à faible débit (32) sont prévus sur une carte d'unité centrale (30) qui est prévue séparément d'une carte de système de puissance (21) de l'unité d'onduleur (20).

3. Véhicule électrique comprenant :
un climatiseur de véhicule, comprenant un compresseur électrique à onduleur intégré (1) selon la revendication 1 ou 2 ;
une unité de commande électrique (ECU) côté véhicule formant une commande de niveau supérieur ;
un bus CAN à haut débit de véhicule (34) ; et
un bus CAN à faible débit de véhicule (35).
